# EUROPÄISCHE PATENTSCHRIFT

(11) **EP 2 227 390 B1**
(45) Veröffentlichungstag und Bekanntmachung des Hinweises auf die Patenterteilung: **12.03.2014**
(21) Anmeldenummer: 08865432.2
(22) Anmeldetag: 19.12.2008
(51) Int. Cl.: B32B 21/06, B44C 5/04, B32B 38/14

(54) **VERFAHREN ZUR HERSTELLUNG EINES DEKORATIVEN LAMINATS**
METHOD FOR PRODUCING A DECORATIVE LAMINATE
PROCÉDÉ DE FABRICATION D'UN STRATIFIÉ DÉCORATIF

(30) Priorität: 21.12.2007 DE 102007062600
(43) Veröffentlichungstag der Anmeldung: 15.09.2010
(73) Patentinhaber: Surface Technologies GmbH & Co. KG, 15837 Baruth (DE)
(72) Erfinder: BUHLMANN, Carsten, 15834 Rangsdorf (DE)
(74) Vertreter: Michalski Hüttermann & Partner Patentanwälte
(86) Internationale Anmeldenummer: PCT/EP2008/068070
(87) Internationale Veröffentlichungsnummer: WO 2009/080772

(56) Entgegenhaltungen:
- EP-A- 1 749 676
- EP-A- 1 820 640
- WO-A-2005/051661

## Beschreibung

Die Erfindung betrifft ein Verfahren zur Herstellung eines dekorativen Laminats mit einem Träger auf der Basis von Holzwerkstoffen oder Holz mit einem Dekor und mindestens einer darüber angeordneten Deck- oder Schutzschicht.

Solche Laminate werden häufig gebraucht, beispielsweise für Fußböden, Wand- und Deckenverkleidungen, Arbeitsplatten und Möbel. Dabei kann das Dekor einen anderen Werkstoff imitieren, beispielsweise Holz, Keramik, Natur- oder Kunststein, oder künstlerische oder praktische Gesichtspunkte berücksichtigen. Gewöhnlich wird das Dekor durch eine mehr oder weniger durchsichtige Duroplastschicht vor Verschleiß geschützt. Es ist auch üblich, die Oberfläche dieser Deckschicht mit einer Struktur zu versehen, die in räumlicher Beziehung zum Dekor steht und als Synchronpore bezeichnet wird.

Die bisherige technische Entwicklung hat im Wesentlichen zu zwei unterschiedlichen Materialgruppen für die Deckschichten geführt. So genannte Lackschichten werden aus Zusammensetzungen gebildet, die durch Wärme und/oder Strahlung polymerisierbare und/oder vernetzbare und dadurch aushärtbare Komponenten enthalten, wie beispielsweise Acrylate, Epoxide, Maleimide.

Die zweite für die Deckschichten verwendete Materialgruppe umfasst die so genannten Aminoplaste. Hierunter versteht man Polykondensationsprodukte aus Carbonylverbindungen, insbesondere Formaldehyd, und Aminogruppen enthaltenen Verbindungen, wie zum Beispiel Harnstoff, Melamin, Urethan. Zur Herstellung der Schichten im Laminat werden üblicherweise wässrige Lösungen von Kondensationsprodukten aus Carbonylverbindung und Amin mit einem Überschuss der Carbonylverbindung eingesetzt, die beim Trocknen und Erhitzen zu einer duroplastischen Struktur vernetzen. Da dabei sowohl das als Lösungsmittel vorhandene als auch das bei der Kondensationsreaktion entstehende Wasser in Form von Dampf entweicht, muss die Aushärtung zumindest im wesentlichen in einer Presse vorgenommen werden, damit das Produkt die gewünschte Festigkeit und Oberflächengüte erhält.

Das Dekor wird herkömmlich in Form eines bedruckten oder anders mit einem Muster versehenen Papiers oder anderen Cellulosevlieses realisiert, das mit einem aushärtbaren Lack oder Kunstharz imprägniert ist und zwischen dem Träger und einer verschleißhindernden äußeren Deckschicht angeordnet wird. Üblicherweise erfordert das Herstellen des imprägnierten Dekorpapiers gesonderte Arbeitsgänge des Druckens und Imprägnierens, die meist in Betrieben außerhalb der eigentlichen Laminatherstellung durchgeführt werden und einen erheblichen Kostenfaktor darstellen. Es ist außerdem erforderlich, dass der Imprägnierstoff des Dekorpapiers mit dem Lack oder Kunstharz der Deckschicht verträglich ist, was insbesondere beim Zusammentreffen von Lack und Kunstharz nicht vorausgesetzt werden kann.

Ein weiteres Problem dieser Technologie besteht darin, dass beim Imprägnieren des Dekorpapiers dieses eine Änderung der Abmessung erfährt, die im weiteren Verfahren berücksichtigt werden muss, wenn die räumliche Beziehung zwischen Dekor und Oberflächenstruktur (Synchronpore) erhalten bleiben soll. Dies gestaltet sich insbesondere dann schwierig, wenn das Produkt häufig gewechselt wird.

Die WO 03/095202 A1 schlägt zur Lösung dieses Problems vor, auf dem Träger vor dem Auflegen des Dekorpapiers eine harzhaltige Zwischenlage anzubringen und ein Dekorpapier zu verwenden, das nur wenig oder gar kein Imprägnierharz enthält. Diese Lösung erscheint jedoch auch nicht optimal, weil das Anbringen der Zwischenlage einen zusätzlichen Arbeitsschritt bedeutet und das Dekorpapier noch immer vor der Laminatherstellung gedruckt werden muss.

Seit längerem gibt es daher Bestrebungen, durch so genannten Direktdruck das Dekor unmittelbar auf dem Träger im Prozess der Laminatherstellung zu erzeugen. Zwischen der Erzeugung des Dekors und der Erzeugung der Oberflächenstruktur brauchen dann keine Verfahrensschritte mehr stattzufinden, welche die Abmessungen verändern. Die DE 19532819 A1 offenbart ein Verfahren zur Herstellung einer Holzwerkstoffplatte mit einer optisch gestaltbaren Oberfläche, wobei die Trägerplatte nacheinander mit einer Grundeinfärbung, einer Versiegelung, einer Druckbasis und einem Dekordruck versehen wird. Als Druckbasis wird hierbei ein Oberflächenlack verwendet. Bei dieser Struktur ist also in der Dekorschicht kein Papier mehr enthalten.

Die WO 2006/002917 A2 beschreibt ein Verfahren zum Herstellen einer Platte mit einer ein Dekor aufweisenden Oberfläche, bei dem die mit dem Dekor zu versehende Oberfläche grundiert, mit mehreren Füllerschichten und Walzenbehandlung geglättet und zum Erzeugen des Dekors bedruckt wird. Die Grundierungsschicht kann als Kunstharzschicht aufgetragen und die gedruckte Oberfläche mit einer Versiegelung, die aus Kunstharz bestehen kann, versehen werden.

Ein Verfahren zur Herstellung von Dekorlaminaten ist auch aus EP 1 749 676 A1 bekannt.

In Parkettmagazin 5/2007, Seiten 49 bis 51, ist die Struktur einer solchen direkt bedruckten Platte beschrieben, die unter der Druckfarbeschicht zumindest eine Primer- und mehrere Walzgrundschichten aufweist.

Den bekannten mit Direktdruck arbeitenden Verfahren ist gemeinsam, dass für die Vorbereitung der zu bedruckenden Oberfläche eine größere Anzahl von Arbeitsgängen notwendig ist.

Die vorliegende Erfindung stellt sich die Aufgabe, ein Verfahren anzugeben, mit dem sich das Dekor auf dekorierten Laminaten einfacher und kostengünstiger anbringen lässt.

Diese Aufgabe wird durch ein Verfahren nach dem Hauptanspruch gelöst.

Es wurde nämlich überraschenderweise gefunden, dass sich auf einem auf mindestens einer Seite des Kerns aus Holz oder Holzwerkstoff befestigten Papiers ein Dekor aufdrucken lässt, welches eine hervorragende Qualität hat und auf dem sich die üblichen aushärtbaren Deckschichten ohne Schwierigkeiten anbringen und aushärten lassen. Das Vlies kann also die Grundierungs- und Glättschichten ohne Qualitätseinbuße des Drucks ersetzen.

Der Träger oder Kern des Laminats besteht aus einem plattenförmigen Holz oder einem Holzwerkstoff. Bevorzugt sind Faserplatte, insbesondere HDF- und MDF-Platten.

Bevorzugt wird das Papier auf dem Kern aufgeklebt. Hierzu wird vorteilhaft entweder eine Seite des Kerns und/oder eine Seite des Papiers mit Klebstoff beschichtet.

Der Klebstoff ist ein flüssiger aushärtender Leim, nämlich ein Harnstoff-Formaldehydleim.

Unter Cellulosevlies werden hier alle im Wesentlichen aus Cellulosefasern bestehenden flächigen Gebilde einschließlich Papier verstanden. Die verschiedenen Qualitäten der Vliese unterscheiden sich beispielsweise durch Dicke, Faserstärke und Porosität. Je nach der angestrebten Detailauflösung des Druckbildes muss eine Obergrenze für die Porengröße eingehalten werden. Andererseits begünstigt die Porosität die Aufnahme der Druckfarbe und die Verankerung mit dem Klebstoff.

Das Cellulosevlies ist ein Papier, insbesondere ein so genanntes Druckbasispapier. Darunter versteht man beispielsweise die herkömmlich für den Druck des Dekorpapiers verwendeten Papierqualitäten. Das Druckbasispapier kann bereits einen hellen Grundfarbton des Dekors aufweisen, es kann aber auch weiß sein oder eine andere Farbe haben. Bevorzugt werden Papiere mit einem Flächengewicht von 20 bis 200 g/m², besonders bevorzugt von 40 bis 80 g/m².

Wird ein flüssiger Leim verwendet, dann ist es günstig, das Vlies durch zumindest teilweise Aushärtung des Leims unter Druck und Wärme mit dem Kern zu verbinden. Ein Vorteil des Verfahrens mit flüssigem Leim besteht aber auch darin, dass der flüssige Leim beim Aushärten Unebenheiten der Oberfläche des Kerns ausgleichen kann, wodurch der Kontakt zwischen Druckform und Bedruckstoff verbessert und die Qualität des Drucks gesteigert wird. Dies gilt insbesondere, wenn der Druck mittels einer Glättwalze auf das Vlies ausgeübt wird.

Es ist erforderlich, die Fließ- und Benetzungseigenschaften und das Auftragsgewicht des Leims auf die Eigenschaften des verwendeten Cellulosevlieses bzw. Papiers abzustimmen, um zu vermeiden, dass Leim durch das Vlies hindurch zur freiliegenden Oberfläche gelangt. Ein solches Durchschlagen des Leims kann für das nachfolgende Drucken störend sein, insbesondere wenn es örtlich ungleichmäßig erfolgt, und stört ggf. auch den optischen Eindruck des fertigen Laminats. Der Fachmann ist jedoch in der Lage, durch Variation der oben genannten Parameter dieses Problem zu vermeiden.

Grundsätzlich sind alle bekannten Druckverfahren zur Erzeugung des Dekors geeignet. Bevorzugt werden jedoch Verfahren, die eine gewisse Toleranz gegenüber Unebenheiten des Bedruckstoffs haben, wie Offsetdruck, indirekter Tiefdruck (Übertragung von der Gravurwalze zum Bedruckstoff mittels Gummituchs), Flexodruck und digitale Druckverfahren wie beispielsweise Tintenstrahl- oder Transferdruck.

Das Dekor kann mit einem Druckwerk einfarbig gedruckt werden, wobei vorteilhaft durch den Farbton des Druckbasispapiers eine zweite Farbe realisiert werden kann. Ebenso ist es möglich, nacheinander mit mehreren Druckwerken mehrere Farben zu drucken.

Bei der Ausführung dieses Verfahrens wurde festgestellt, dass die Oberfläche des auf dem Kern befestigten Vlieses hinreichend saugfähig bleibt, wenn man das Durchschlagen des Leims vermeidet. Das hat zur Folge, dass die Druckfarbe vom Vlies bereitwillig aufgenommen wird und keine Gefahr des Verwischens bei weiteren Arbeitsschritten wie etwa weiteren Druckstufen oder Anbringen der Deckschicht besteht. Es genügen daher relativ kurze Trockenzeiten nach den einzelnen Druckvorgängen.

Als Material für die mindestens eine aushärtbare Deckschicht sind grundsätzlich die bekannten Kunstharze und Lacke geeignet. So ist es möglich, auch strahlungsvernetzbare Lacke als Deckschicht aufzutragen. Bevorzugt werden jedoch Deckschichten aus Aminoplasten, insbesondere Melamin-Formaldehyd-Harze.

Es ist vorteilhaft, in die mindestens eine Deckschicht einen teilchenförmigen harten Feststoff, bevorzugt Aluminiumoxid, Siliziumdioxid, Siliziumcarbid oder Bornitrid, zu inkorporieren. Dies erhöht die Abriebfestigkeit der Deckschicht. Der Feststoff hat eine geeignete mittlere Teilchengröße beispielsweise 30 bis 200 µm.

Bei einer vorteilhaften erfindungsgemäßen Ausführungsform wird die Deckschicht in Form eines sogenannten Overlays aufgebracht. Dabei handelt es sich um eine Faserstoffschicht, beispielsweise ein Papier, die mit dem für die Deckschicht vorgesehenen aushärtbaren Aminoplast, beispielsweise Melamin-Formaldehydharz, getränkt ist. In dieses Overlay kann auch der harte Feststoff inkorporiert sein.

Besonders vorteilhaft ist es, die Deckschicht aus Aminoplast in Form von mehreren Teilschichten aufzutragen und jede Teilschicht vor dem Auftragen der nächsten anzutrocknen. Hierdurch werden die mechanischen Eigenschaften der ausgehärteten Deckschicht verbessert. Gegebenenfalls wird bevorzugt der teilchenförmige harte Feststoff in die untere der Teilschichten und nicht in die äußerste Teilschicht inkorporiert. Dadurch erreicht man, dass die Festkörperteilchen nicht aus der Oberfläche des fertigen Laminats hervorstehen, was sowohl für Aussehen und Haptik abträglich sein als auch zur Abnutzung und Beschädigung der Werkzeuge für die weitere Bearbeitung, beispielsweise der Pressflächen, führen kann.

Nach dem Auftragen der Deckschicht wird das Laminat unter Druck erhitzt. Hier zu dient bevorzugt eine Kurztakt- oder Doppelbandpresse. Die anzuwendenden Drücke und Temperaturen richten sich nach der Art des Harzes und der Struktur der Laminatschichten. Geeignete Bereiche liegen zwischen 20 und 60 kN/cm² beziehungsweise 160 bis 220°C. Beim Pressen wird durch die Form der Pressfläche die endgültige Struktur der Laminatoberfläche festgelegt. Die Oberflächenstruktur kann beim Produktwechsel flexibel geändert werden, wenn zwischen Pressbacken und Laminatoberfläche vorzugsweise ein auswechselbares Pressblech oder ein Pressband oder eine Pressfolie eingelegt wird. So ist es auch möglich, eine in räumlicher Beziehung zum Dekor stehende positive (abgesenkte) oder negative (erhabene) Porenstruktur (Synchronpore) oder auch eine hochglänzende oder kontrolliert mattierte Oberfläche zu schaffen. Das erfindungsgemäße Verfahren bietet hierbei den besonderen Vorteil, dass Unregelmäßigkeiten der Schichten ohne weitere Zwischen- oder Nachbehandlung, wie das Anbringen von Schleif- und Spachtellackschichten oder die Behandlung mit einer Glättwalze, beim Pressen ausgeglichen werden. Die Synchronpore kann auf einfache Weise realisiert werden, wenn für die Fertigung des Pressblechs, Pressbands oder der Pressfolie ein digital gesteuertes Verfahren benutzt und für den digitalen Druck der gleiche Datensatz wie für das Pressblech, Pressband oder die Pressfolie, ggf. nach Umrechnung, verwendet wird, weil das Druckbild nach dem Drucken nicht mehr schrumpft.

Vorteilhaft ist das Laminat auf der nicht dekorierten Seite des Kerns mit einem Gegenzug versehen, um eine Verformung bei wechselnden Klimabedingungen zu verhindern. Am einfachsten wird dies erreicht, wenn der Gegenzug in seinem Schichtaufbau dem Aufbau der Dekorseite entspricht. Bei der Anwendung des erfindungsgemäßen Verfahrens kann dieser Gegenzug jeweils gleichzeitig mit den entsprechenden Schichten der Dekorseite aufgetragen werden, das heißt gegebenenfalls Aufkleben eines Gegenzugpapiers und Auftragen der der Deckschicht entsprechenden Schicht beziehungsweise Schichten.

Durch das erfindungsgemäße Verfahren wird bei der Herstellung der Laminate die Vorbereitung der Kerne für den Direktdruck gegenüber dem Stand der Technik wesentlich wirtschaftlicher, weil nur noch eine Schicht aus Papier angebracht wird und die bei den bekannten Verfahren notwendigen mehrfachen Beschichtungs- und Glättungsoperationen entfallen.

### Ausführungsbeispiel

MDF-Platten von etwa 2 x 3 m Größe werden gereinigt, geglättet und temperiert. Mittels einer Walzenbeschichtungsanlage wird ein saurer Härter für Harnstoff-Formaldehyd-Leim (Härter 2547-Akzo Nobel) mit einem Auftragsgewicht von etwa 8 g pro Quadratmeter bei Umgebungstemperatur aufgetragen und mit einem IR-Strahler leicht angetrocknet. Hierauf wird wiederum mit einer Walze eine Leimschicht von etwa 40 g pro Quadratmeter (Harnstoff-Formaldehydleim 1206-Akzo Nobel) aufgetragen. Auf die noch nasse Leimschicht wird von der Rolle ein cremefarbenes Druckbasispapier mit einem Flächengewicht von 60 g pro Quadratmeter aufgelegt und in einem Kalander mit 160 kN/cm und einer Walzentemperatur von 190 °C aufgepresst, wobei der Leim zumindest teilweise aushärtet. Dabei bleibt die Außenfläche des Papiers unverändert, das heißt, es schlägt kein Leim durch. Danach wird das Papier im Spalt zwischen den Platten geschnitten. Die Platten werden sofort zu einer Druckstation gefördert, in der eine erste Farbe des Dekors mittels indirekten Tiefdrucks aufgedruckt wird. In einer weiteren Druckstation werden die zweite und die dritte Farbe aufgetragen, wobei kurzes Ablüften zwischen den Stationen ausreicht, um die Druckfarbe zu trocknen. Nun wird eine dünne Schicht eines Melamin-Formaldehyd-Harzes (MFH, etwa 10 g/m²) aufgetragen und mit einem IR-Strahler angetrocknet, bis die Oberfläche staubtrocken ist. In diesem Zustand können die Platten gestapelt beziehungsweise gelagert werden.

Die Weiterverarbeitung der dekorierten Platten erfolgt entweder unmittelbar nach dem Druck (ohne Auftragen der dünnen MFH-Schicht) oder nach Auftragen dieser Schicht und Lagerung. Nun wird auf das Dekor auf der Oberseite der Platte beziehungsweise auf die dünne MFH-Schicht mittels einer Auftragswalze (zwecks geringen Verschleißes aus Keramik) eine Schicht eines Melaminharzes in Wasser aufgetragen, die Teilchen von Aluminiumoxid (Korund) mit einer mittleren Größe von 180 - 220 µm enthält. Die Viskosität der Harzlösung beträgt 120 mPas bei einem Feststoffgehalt von 60 Gewichtsprozent. Das Auftragsgewicht der Harzlösung beträgt etwa 50 g/m², das des Korunds 15 - 20 g/m². Der Harzauftrag reicht nicht aus, um die Korundteilchen völlig zu bedecken. Das Harzauftragsgewicht entspricht einer Schichtdicke von etwa 40 µm (Dichte 1,25 g/cm³). Mittels eines IR-Strahlers wird der Harzauftrag so weit angetrocknet, dass seine Oberfläche staubtrocken ist und hinreichende Haftung am Dekor besteht. Dabei wird ein Luftstrom über die Oberfläche der Harzschicht geführt. Gleichzeitig mit dem Harzauftrag auf die Oberseite wird ein gleicher Auftrag, jedoch ohne Korund, auf der Unterseite der Platte als Gegenzug angebracht und angetrocknet. Die Platte ruht beim Fördern auf einem geeigneten Fördermittel, beispielsweise einem aus der Lackiertechnik bekannten sogenannten Scheibentransport, der die Platte punktuell trägt und so eine Trocknung der Plattenunterseite ermöglicht. Nach dem Antrocknen liegt die Platte im Randbereich auf schmalen Rollen. Nach dem Antrocknen wird eine weitere Schicht von etwa 50 g/m² des wässrigen Melaminharzes auf die Dekorseite und auf die Unterseite aufgetragen und wiederum angetrocknet. Dieser Vorgang wird noch bis zu dreimal wiederholt. Dadurch hat nun die Harzschicht eine Dicke von bis zu 250 µm und bedeckt die Korundteilchen völlig.

Die nun mit Nutzschicht und Gegenzug beschichtete Platte wird in eine KT-Presse gelegt und etwa 8 - 15 s bei einer Temperatur der Pressplatten von etwa 200 °C (entsprechend etwa 160 °C am Produkt) und einem Druck von 35 - 60 kN/cm² gepresst. Dabei wird das dem Dekor entsprechende Oberflächenrelief eingeprägt (Synchronpore).

## Patentansprüche

1. Verfahren zum Herstellen eines dekorierten Laminats mit einem plattenförmigen Kern aus Holz oder Holzwerkstoff, einer Dekorschicht auf mindestens einer Seite des Kerns und einer Deckschicht mit Aminoplast auf der Dekorschicht, umfassend die Schritte
- Bereitstellen des plattenförmigen Kerns,
- Befestigen eines Papiers auf mindestens einer Seite des Kerns,
- Drucken des Dekors auf die freiliegende Seite des Papiers,
- Anbringen von mindestens einer aushärtbaren Deckschicht auf dem gedruckten Dekor,
- Aushärten der aushärtbaren Schichten,
wobei das Papier auf den Kern aufgeklebt wird, wobei vor dem Aufkleben des Papieres mindestens eine Seite des Kerns mit einem Klebstoff beschichtet wird oder vor dem Aufkleben das Papier auf einer Seite mit einem Klebstoff beschichtet wird, wobei als Klebstoff ein flüssiger aushärtbarer Harnstoff-Formaldehyd Leim verwendet wird, wobei das Papier mit dem plattenförmigen Kern unter Druck und Wärme bei zumindest teilweiser Aushärtung des Leims verbunden wird und wobei die Fließ- und Benetzungseigenschaften und das Auftragsgewicht des Leims auf die Eigenschaften des verwendeten Papieres abzustimmen sind, um zu vermeiden, dass Leim durch das Papier hindurch zur freien Oberfläche gelangt,
**dadurch gekennzeichnet, dass** vor der Befestigung des Papiers auf mindestens einer Seite des Kerns ein saurer Härter für einen Harnstoff- Formaldehydleim auf die zumindest eine Seite des Kerns aufgetragen wird, wobei der Härter vor dem Auftrag des Leims mit einem IR-Strahler leicht angetrocknet wird.

2. Verfahren nach einem der vorhergehenden Ansprüche, **dadurch gekennzeichnet, dass** das Papier ein Flächengewicht von 40 bis 200 g/m² hat.

3. Verfahren nach einem der vorhergehenden Ansprüche, **dadurch gekennzeichnet, dass** das Dekor durch Offsetdruck, indirekten Tiefdruck, Flexodruck oder ein digitales Druckverfahren gedruckt wird.

4. Verfahren nach einem der vorhergehenden Ansprüche, **dadurch gekennzeichnet, dass** die mindestens eine Deckschicht aus einem Aminoplast gebildet ist und das Aminoplast ein Melamin-Formaldehyd-Harz ist.

5. Verfahren nach einem der vorhergehenden Ansprüche, **dadurch gekennzeichnet, dass** in mindestens einer Deckschicht ein teilchenförmiger harter Feststoff vorhanden ist.

6. Verfahren nach einem der vorhergehenden Ansprüche, **dadurch gekennzeichnet, dass** die Deckschicht in Form eines Overlays angebracht wird.

7. Verfahren nach einem der vorhergehenden Ansprüche, **dadurch gekennzeichnet, dass** mehrere Deckschichten aufgetragen werden.

8. Verfahren nach Anspruch 7, **dadurch gekennzeichnet, dass** jede Deckschicht nach dem Auftragen angetrocknet wird.

9. Verfahren nach Anspruch 7 oder 8, **dadurch gekennzeichnet, dass** der harte Feststoffmit der untersten Schicht aufgetragen wird und die oberste Schicht keinen Feststoff enthält.

10. Verfahren nach einem der vorhergehenden Ansprüche, **dadurch gekennzeichnet, dass** das Laminat aus mindestens Kern, Papier und einer Deckschicht unter Druck und Wärme ausgehärtet wird.

11. Verfahren nach Anspruch 10, **dadurch gekennzeichnet, dass** beim Erhitzen und Pressen eine Struktur in die Oberfläche der äußersten Deckschicht geprägt wird.

12. Verfahren nach einem der vorhergehenden Ansprüche, **dadurch gekennzeichnet, dass** auf der dem Dekor abgewandten Seite des Kerns gleichzeitig mit den Dekorschichten ein Gegenzug angebracht wird.

## Claims

1. Method for producing a decorative laminate having a board-like core made of wood or wooden material, a decorative layer on at least one side of the core and a covering layer with aminoplast on the decorative layer, comprising the steps
- providing the board-like core,
- fixing a paper on at least one side of the core,
- printing the decoration on the exposed side of the paper,
- applying at least one curable covering layer to the printed decoration,
- curing the curable layers,
the paper being adhesively bonded to the core, at least one side of the core being coated with an adhesive before the bonding of the paper or the paper being coated with an adhesive on one side before the bonding, the adhesive used being a liquid curable urea formaldehyde glue, the paper being bonded to the board-like core under pressure and heat with at least partial curing of the glue, and the flow and wetting properties and the application weight of the glue having to be coordinated with the properties of the paper used in order to avoid glue getting through the paper to the free surface,
**characterized in that**
before the fixing of the paper to at least one side of the core, an acid hardener for a urea formaldehyde glue is applied to the at least one side of the core, the hardener being dried on slightly with an infrared radiant source before the application of the glue.

2. Method according to one of the preceding claims, **characterized in that** the paper has a weight per unit area of 40 to 200 g/m².

3. Method according to one of the preceding claims, **characterized in that** the decoration is printed by means of offset printing, indirect gravure printing, flexographic printing or a digital printing process.

4. Method according to one of the preceding claims, **characterized in that** the at least one covering layer is formed from an aminoplast and the aminoplast is a melamine formaldehyde resin.

5. Method according to one of the preceding claims, **characterized in that** in at least one covering layer there is a particulate hard solid material.

6. Method according to one of the preceding claims, **characterized in that** the covering layer is applied in the form of an overlay.

7. Method according to one of the preceding claims, **characterized in that** a plurality of covering layers are applied.

8. Method according to Claim 7, **characterized in that** each covering layer is dried on following the application.

9. Method according to Claim 7 or 8, **characterized in that** the hard solid material is applied with the lowest layer and the uppermost layer contains no solid material.

10. Method according to one of the preceding claims, **characterized in that** the laminate made of at least core, paper and a covering layer is cured under pressure and heat.

11. Method according to Claim 10, **characterized in that**, during heating and pressing, a structure is impressed into the surface of the outermost covering layer.

12. Method according to one of the preceding claims, **characterized in that**, on the side of the core facing away from the decoration, a backing is applied at the same time as the decorative layer.

## Revendications

1. Procédé de fabrication d'un stratifié décoré comprenant un noyau en forme de plaque en bois ou en un matériau à base de bois, une couche décorative sur au moins un côté du noyau et une couche de finition comprenant un aminoplaste sur la couche décorative, comprenant les étapes suivantes :
- la préparation du noyau en forme de plaque,
- la fixation d'un papier sur au moins un côté du noyau,
- l'impression de la décoration sur le côté exposé du papier,
- l'application d'au moins une couche de finition durcissable sur la décoration imprimée,
- le durcissement des couches durcissables,
le papier étant collé sur le noyau, au moins un côté du noyau étant revêtu avec un adhésif avant le collage du papier ou le papier étant revêtu sur un côté avec un adhésif avant le collage du papier, une colle liquide durcissable à base d'urée-formaldéhyde étant utilisée en tant qu'adhésif, le papier étant relié avec le noyau en forme de plaque sous pression et chaleur avec durcissement au moins partiel de la colle, et les propriétés d'écoulement et de mouillage et le poids de colle déposé devant être ajustés aux propriétés du papier utilisé afin d'éviter que la colle n'atteigne la surface exposée au travers du papier,
**caractérisé en ce qu'**avant la fixation du papier sur au moins un côté du noyau, un durcisseur acide pour une colle à base d'urée-formaldéhyde est appliqué sur le ou les côtés du noyau, le durcisseur étant légèrement séché avec un émetteur d'IR avant l'application de la colle.

2. Procédé selon l'une quelconque des revendications précédentes, **caractérisé en ce que** le papier a un grammage de 40 à 200 g/m².

3. Procédé selon l'une quelconque des revendications précédentes, **caractérisé en ce que** la décoration est imprimée par impression offset, rotogravure indirecte, flexographie ou par un procédé d'impression numérique.

4. Procédé selon l'une quelconque des revendications précédentes, **caractérisé en ce que** la ou les couches de finition sont formées à partir d'un aminoplaste et l'aminoplaste est une résine de mélamine-formaldéhyde.

5. Procédé selon l'une quelconque des revendications précédentes, **caractérisé en ce qu'**un solide particulaire dur est présent dans au moins une couche de finition.

6. Procédé selon l'une quelconque des revendications précédentes, **caractérisé en ce que** la couche de finition est appliquée sous la forme d'un revêtement.

7. Procédé selon l'une quelconque des revendications précédentes, **caractérisé en ce que** plusieurs couches de finition sont appliquées.

8. Procédé selon la revendication 7, **caractérisé en ce que** chaque couche de finition est durcie après l'application.

9. Procédé selon la revendication 7 ou 8, **caractérisé en ce que** le solide dur est appliqué avec la couche la plus inférieure et la couche la plus supérieure ne contient pas de solide.

10. Procédé selon l'une quelconque des revendications précédentes, **caractérisé en ce que** le stratifié constitué d'un noyau, d'un papier et d'une couche de finition est durci sous pression et chaleur.

11. Procédé selon la revendication 10, **caractérisé en ce qu'**une structure est gaufrée dans la surface de la couche de finition la plus extérieure lors du chauffage et de la compression.

12. Procédé selon l'une quelconque des revendications précédentes, **caractérisé en ce qu'**un contre-parement est appliqué simultanément aux couches décoratives sur le côté du noyau opposé à la décoration.
